# EUROPEAN PATENT APPLICATION

(11) **EP 1 696 607 A2**
(43) Date of publication of application: **30.08.2006**
(21) Application number: 06007334.3
(22) Date of filing: 09.07.2001
(51) Int. Cl.: H04L 12/28, H04L 29/06, H04Q 7/38, H04L 12/56

(54) **Handoff method and agent apparatus**

(30) Priority: 18.10.2000 JP 2000318080
(62) Divisional of application: 01116566.9
(71) Applicant: MITSUBISHI DENKI KABUSHIKI KAISHA, Chiyoda-ku, Tokyo 100-8310 (JP)
(72) Inventor: Shimizu, Keiichi, Chiyoda-ku Tokyo 100-8310 (JP); Ito, Shuji, Chiyoda-ku Tokyo 100-8310 (JP); Ishibashi, Koichi, Chiyoda-ku Tokyo 100-8310 (JP)
(74) Representative: Bohnenberger, Johannes

(57) **Abstract**

In accordance with a handoff method, when a handoff of mobile terminal equipment (2) from a previous foreign agent (5-1) to a new foreign agent (5-2) is detected, the mobile terminal equipment is doubly registered with either a home agent (3) or a gateway foreign agent (21) so that the mobile terminal equipment is associated with both the previous foreign agent and the new foreign agent. During the handoff, either the home agent or the gateway foreign agent determines whether or not an IP packet destined for the mobile terminal equipment is of real-time traffic, and then bicasts the IP packet to both the previous foreign agent and the new foreign agent if the IP packet is of real-time traffic, and buffers the IP packet otherwise. When the handoff is completed, the regional registration with either the home agent or the gateway foreign agent is updated so that the mobile terminal equipment is associated only with the new foreign agent. Either the home agent or the gateway foreign agent then transfers IP packets of non-real-time traffic buffered therein to the new foreign agent.

## Description

### BACKGROUND OF THE INVENTION

### Field of the Invention

The present invention relates to a handoff method of performing a handoff process when mobile terminal equipment is moving from a previous foreign agent to a new foreign agent in a mobile IP network so that the mobile terminal equipment will be accommodated by the new foreign agent. It also relates to an agent apparatus that serves as either a home agent or a gateway foreign agent that transfers IP packets destined for mobile terminal equipment to a foreign agent in a mobile IP network, to which mobile terminal equipment moves.

### Description of the Prior Art

As a method of making it possible for mobile terminal equipment (referred to as ME from here on) having an IP (Internet Protocol) address to keep communicating without interrupting sessions when the ME is moving between .subnets, mobile IP (Request For Comment 2002) is proposed by IETF (Internet Engineering Task Force).

Next, packet transmission for mobile IP will be explained. When mobile terminal equipment has moved to a domain provided by a foreign agent (FA), for example, the mobile terminal equipment acquires its own address for the domain as a care-of address, and notifies a home agent (HA) of the care-of address by way of the foreign agent. The home agent registers the care-of address from the mobile terminal equipment after bringing the care-of address into correspondence with a home address assigned to the mobile terminal equipment. On the other hand, when other terminal equipment that is the party on the other end of the communication with the mobile terminal equipment transmits an IP packet to the mobile terminal equipment, it directs the IP packet into the home address of the mobile terminal equipment. When the IP packet reaches the home agent by way of the IP network, the home agent encapsulates the IP packet. The home agent then directs it to the care-of address of the mobile terminal equipment based on the registered information on the mobile terminal equipment. When the foreign agent receives the encapsulated IP packet, it releases the encapsulation and then supplies the original IP packet to the mobile terminal equipment having the care-of address. Thus, any IP packet destined for the mobile terminal equipment can reach the mobile terminal equipment by way of the home agent and the foreign agent even if the mobile terminal equipment moves between domains.

On the other hand, in accordance with a project, such as 3GPP (3rd Generation Partnership Project) or 3GPP2, which promotes third-generation mobile communication networks, the application of the IP network and mobile IP technology to a cellular phone network has been examined. In this case, there is a need to IP packetize and real-time transfer audio data.

Furthermore, as mobile terminal equipment which uses the Internet advances and comes into widespread use, non-real-time traffic according to another service in the Internet, such as WWW (World Wide Web) or e-mail, can be multiplexed with audio data in a cellular phone network.

Internet draft (draft-elmalki-soliman-hmipv4v6-00.txt) is proposed, as a technology of implementing real-time traffic such as audio data using mobile IP, by IETF. This technology is the one of additionally performing a regional registration associated with a new foreign agent with a home agent without erasing a regional registration associated with a previous foreign agent with the home agent when performing a handoff of mobile terminal equipment, bicasting an IP packet destined for the mobile terminal equipment to the previous and new foreign agents by means of the home agent, and controlling the transfer of the IP packet destined for the mobile terminal equipment from the previous foreign agent to the new external agent, so as to enable a real-time communication during handoff.

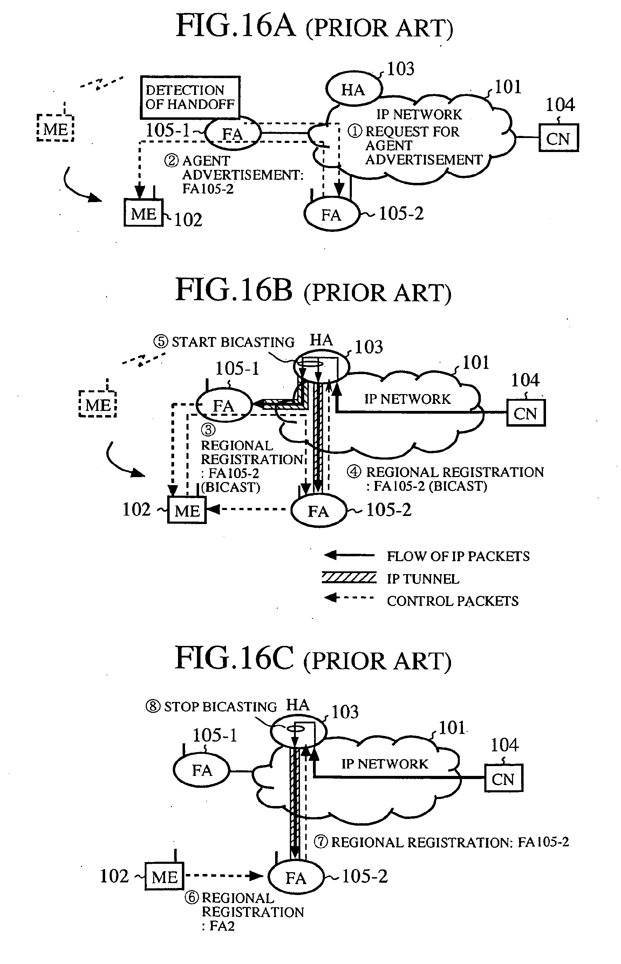

Figs. 16A, 16B, and 16C are diagrams for explaining the above-mentioned prior art handoff method. In Figs. 16A, 16B, and 16C, reference numeral 101 denotes an IP network consists of routers, and so on, numeral 102 denotes mobile terminal equipment (ME), numeral 103 denotes a home agent (HA), numeral 104 denotes other terminal equipment (CN) that is the party on the other end of the communication with the mobile terminal equipment 102, numeral 105-1 denotes a foreign agent (FA) (previous foreign agent) from which the mobile terminal equipment 102 is moving, and numeral 105-2 denotes a foreign agent (FA) (new foreign agent) to which the mobile terminal equipment 102 is moving.

The FA 105-1, from which the mobile terminal equipment 102 is moving, detects a start of a handoff of the ME 102 from the FA 105-1 to the FA 105-2, to which the mobile terminal equipment 102 is moving, using layer 2 functionality provided by mobile IP. And, as shown in Fig. 16A, when the FA 105-1 detects the handoff, it makes a request of the FA 105-2 to agent-advertise to the ME 102. The FA 105-2 receives the request of the agent advertisement and then transmits the agent advertisement to the ME 102 by way of the FA.105-1.

As shown in Fig. 16B, when the ME 102 receives the agent advertisement, it transmits a mobile IP regional registration message to the FA 105-2 by way of the FA 105-1. The FA 105-2 then transfers the regional registration message to the HA 103. At this time, the ME 102 makes a request of simultaneous binding defined by mobile IP, and performs a regional registration associated with both the FA 105-1 and the FA 105-2 with the HA 103. As a result, both the IP address of the FA 105-1 and the IP address of the FA 105-2 are doubly registered with the HA 103 as the care-of address of the ME 102. The HA 103 then encapsulates any IP packet destined for the ME 102 and bicasts it to both the FA 105-1 and the FA 105-2.

After that, when the handoff has been completed and the ME 102 has completely moved to the FA 105-2, the ME 102 transmits a mobile IP regional registration message including a request for release of simultaneous binding to the FA 105-2, as shown in Fig. 16C. The FA 105-2 then transfers the regional registration message including the request for release of simultaneous binding to the HA 103. As a result, the HA 103 is placed in a state in which only the IP address of the FA 105-2 is registered as the care-of address of the ME 102. After that, the HA 103 encapsulates any IP packet destined for the ME 102, and transfers it only to the FA 105-2. The bicasting can thus maintain real-time traffic during handoff.

On the other hand, other Internet draft (draft-mkhalil-mobileip-buffer-00.txt) discloses a technology of preventing packet losses during handoff. According to the technology, mobile terminal equipment makes a request of a previous foreign agent to buffer IP packets destined for itself and temporarily store the IP packets when it detects a handoff. After establishing a path leading to a new foreign agent and completing a regional registration, the mobile terminal equipment can make a request of the previous foreign agent to batch-transfer the IP packets stored in the previous foreign agent to the new foreign agent, thus preventing the abandonment of the IP packets.

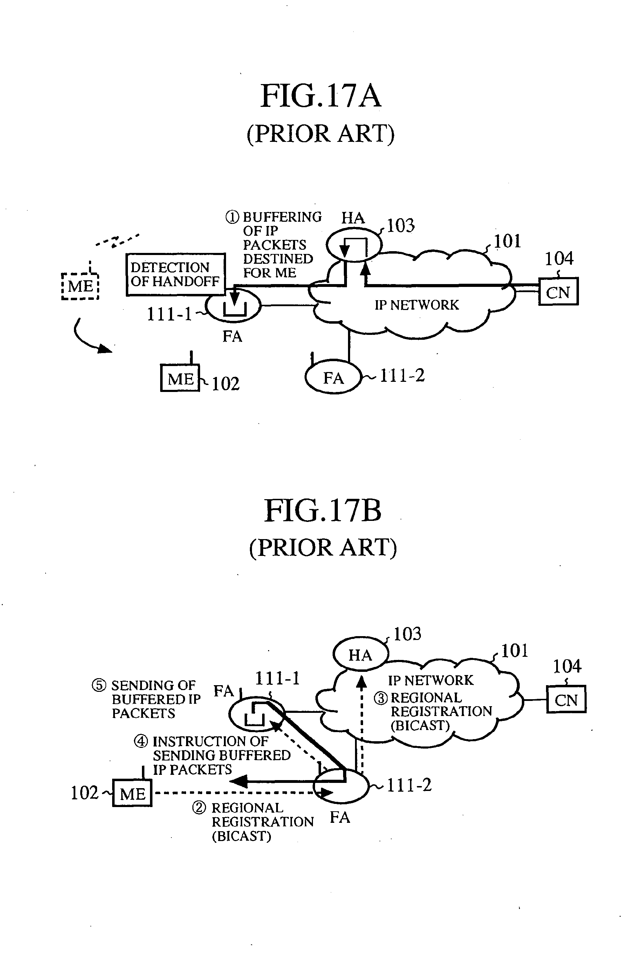

Figs. 17A and 17B are diagrams for explaining the above-mentioned prior art handoff method. In the figures, reference numeral 111-1 denotes a foreign agent (FA) from which an ME 102 is moving, and numeral 112-1 denotes a foreign agent (FA) to which the ME 102 is moving. The other components of Fig. 17A are the same as those shown in Fig. 16A. In accordance with the handoff method disclosed in the Internet draft (draft-mkhalil-mobileip-buffer-00.txt), the ME detects a handoff. Hereafter, assume that FAs can detect a handoff according to the other Internet draft (draft-elmalki-soliman-hmipv4v6-00.txt).

As shown in Fig. 17A, the FA 111-1, from which the ME 102 is moving, can detect a start of a handoff of the ME 102 from the FA 111-1 to the FA 111-2, to which the ME 102 is moving, by using layer 2 functionality according to mobile IP. When the FA 111-1, from which the ME 102 is moving, detects a start of a handoff of the ME 102, it temporarily buffers IP packets destined for the ME 102.

After that, when the handoff has been completed and the ME 102 has completely moved to the FA 111-2, the ME 102 transmits a mobile IP regional registration message to the FA 111-2, as shown in Fig. 17B, and the FA 111-2 transfers the regional registration message to the HA 103. Furthermore, the ME 102 incorporates a request for batch-transfer of the buffered packets to the FA 111-1 into the regional registration message, and the FA 111-2 transmits the transfer request to the FA 111-1. And, the buffered packets destined for the ME 102 are then forwarded to the ME 102 at a time by way of the FA 111-2. The buffering can thus prevent packet losses during handoff.

A problem with prior art handoff methods and agent apparatuses constructed as above is that it is difficult to apply such a prior art mobile IP technology, just as it is, to a cellular phone network in which real-time traffic exists together with non-real-time traffic.

In other words, although bicasting according to mobile IP makes it possible to maintain real-time traffic during a handoff, no measure is taken to prevent packet losses. Accordingly, prior art handoff methods are unsuitable for cases where a protocol sensitive to packet losses, such as TCP (Transmission Control Protocol), works as a higher level of IP under a radio environment with a lot of packet losses. Furthermore, since real-time traffic is bicasted, the efficiency of use of radio bands of frequencies is reduced when high volumes of burst traffic according to internet services flow.

On the other hand, the technique of disposing the above-mentioned buffering mechanism quite independently of the bicasting mechanism can be applied only to non-real-time traffic because the real time property cannot be ensured. As an alternative, it is possible to make both of these mechanisms available and to select either of them. In this case, while either of the mechanisms is selected when the mobile terminal equipment performs a regional registration with a home agent by way of a foreign agent according to mobile IP, the mobile terminal equipment has to always monitor whether it sends and receives real-time traffic or non-real-time traffic according to mobile IP. In addition, in mobile terminal equipment, such as a cellular phone, in which a telephone call by voice and Internet services can be generated at the same time, it is difficult to enjoy the telephone call and Internet services normally even if one of the mechanisms is selected.

In addition, although the timing of a mobile IP handoff is determined when a new foreign agent is detected after periodically performing detection of the new foreign agent, it is difficult to implement a real-time handoff.

### SUMMARY OF THE INVENTION

The present invention is proposed to solve the above-mentioned problems. It is therefore an object of the present invention to provide a handoff method comprising the steps of: when starting a handoff of mobile terminal equipment from a previous foreign agent to a new foreign agent, doubly regional-registering the mobile terminal equipment with either a home agent or a gateway foreign agent so that the mobile terminal equipment is associated with both the previous foreign agent and the new foreign agent, when either the home agent or the gateway foreign agent receives an IP packet destined for the mobile terminal equipment, allowing either the home agent or the gateway foreign agent to determine whether or not the IP packet is of real-time traffic, if the IP packet is of real-time traffic, to bicast it to both the previous foreign agent and the new foreign agent, and, if the IP packet is of non-real-time traffic, to buffer it, when the handoff has been completed, updating the regional registration of the mobile terminal equipment so that the mobile terminal equipment is associated only with the new foreign agent, and, when IP packets of non-real-time traffic are buffered in either the home agent or the gateway foreign agent, allowing either the home agent or the gateway foreign agent to transfer the IP packets of the non-real-time traffic to the new foreign agent, thus carrying out handoffs properly even when real-time traffic and non-real-time traffic are generated at the same time.

In accordance with an aspect of the present invention, there is provided a handoff method of performing a handoff when mobile terminal equipment is moving from a previous foreign agent to a new foreign agent in a mobile IP network, the method comprising the steps of: when starting a handoff, additionally performing a regional registration of the mobile terminal equipment so as to doubly register the mobile terminal equipment so that the mobile terminal equipment is associated with both the previous foreign agent and the new foreign agent; determining whether or not an IP packet destined for the mobile terminal equipment is of real-time traffic when the mobile terminal equipment is doubly registered; bicasting the IP packet to both the previous foreign agent and the new foreign agent if the IP packet is of real-time traffic, and buffering the IP packet if the IP packet is of non-real-time traffic; when the handoff is completed, updating the regional registration associated with the previous foreign agent so that the mobile terminal equipment is associated only with the new foreign agent; and, when IP packets of non-real-time traffic are buffered, transferring the buffered IP packets of non-real-time traffic to the new foreign agent.

In accordance with a preferred embodiment of the present invention, in the double regional registration step, the mobile terminal equipment is registered with a home agent, and the home agent performs the IP packet determination step, the bicasting and buffering step, and the transferring step. The home agent can determine whether or not an IP packet destined for the mobile terminal equipment is of real-time traffic based on information on a header of the IP packet. As an alternative, the home agent can determine whether or not an IP packet destined for the mobile terminal equipment is of real-time-traffic based on information on an upper layer, which is placed in a payload of the IP packet.

In accordance with another preferred embodiment of the present invention, in the double regional registration step, the mobile terminal equipment is registered with a gateway foreign agent, and the gateway foreign agent performs the IP packet determination step, the bicasting and buffering step, and the transferring step. The gateway foreign agent can determine whether or not an IP packet destined for the mobile terminal equipment is of real-time traffic based on information on a header of the IP packet. As an alternative, the gateway foreign agent can determine whether or not an IP packet destined for the mobile terminal equipment is of real-time traffic based on information on an upper layer, which is placed in a payload of the IP packet.

In accordance with a further preferred embodiment of the present invention, the mobile IP network is a cellular phone network in accordance with Radio Access Network standards which can perform a mobile IP procedure, the mobile terminal equipment is a cellular phone, and each of the new and the previous foreign agents is a radio network control unit that can give and receive an authority to control the cellular phone, as a handoff, according to an SRNC relocation procedure.

Preferably, the radio network control unit piggybacks a mobile IP message onto a control message according to the SRNC relocation procedure. The radio network control unit can detect a start time and end time of the handoff according to an SRNC relocation procedure, and, when the cellular phone can establish communication according to mobile IP, notifies the cellular phone of the start time and end time of the handoff according to the mobile IP procedure. As an alternative, the radio network control unit can detect a start time and end time of the handoff according to an SRNC relocation procedure, and, when the cellular phone cannot establish communication according to mobile IP, notifies the cellular phone of the start time and end time of the handoff according to the SRNC relocation procedure, and autonomously performs a regional registration of the cellular phone or changes the regional registration.

In accordance with another preferred embodiment of the present invention, after a plurality of radio network control units have accommodated the cellular phone, a previous one of the plurality of radio network control units assumes that an SRNC relocation procedure generated after a predetermined transfer of an authority to control the cellular phone is a handoff procedure, so as to detect the start time and end time of the handoff.

In accordance with another aspect of the present invention, there is provided a handoff method of performing a handoff when mobile terminal equipment is moving from a previous foreign agent to a new foreign agent in a mobile IP network, the method comprising the steps of: when starting a handoff, additionally performing a regional registration of the mobile terminal equipment with a home agent so as to doubly register the mobile terminal equipment so that the mobile terminal equipment is associated with both the previous foreign agent and the new foreign agent; allowing the home agent to determine whether or not an IP packet destined for the mobile terminal equipment is of real-time traffic when the mobile terminal equipment is doubly registered; allowing the home agent to bicast the IP packet to both the previous foreign agent and the new foreign agent if the IP packet is of real-time traffic, and transferring the IP packet to the previous foreign agent if the IP packet is of non-real-time traffic; allowing the previous foreign agent to buffer the IP packet of non-real-time traffic transferred from the home agent therein; when the handoff is completed, if IP packets of non-real-time traffic are buffered in the previous foreign agent, allowing the previous foreign agent to transfer the buffered IP packets of non-real-time traffic to the new foreign agent; and, when the handoff is completed, updating the regional registration associated with the previous foreign agent so that the mobile terminal equipment is associated only with the new foreign agent.

In accordance with a further aspect of the present invention, there is provided an agent apparatus for transferring IP packets to a new foreign agent in a mobile IP network, to which mobile terminal equipment is moving: the apparatus comprising: a unit for, upon receiving an IP packet destined for the mobile terminal equipment when the mobile terminal equipment is doubly registered during a handoff, determining whether or not the IP packet is of real-time traffic; a unit for bicasting the IP packet to both the previous foreign agent and the new foreign agent if the IP packet is of real-time traffic, and for buffering the IP packet if the IP packet is of non-real-time traffic; a unit for, when the handoff has been completed and IP packets of non-real-time traffic are buffered, transferring the buffered IP packets of non-real-time traffic to the new foreign agent.

Further objects and advantages of the present invention will be apparent from the following description of the preferred embodiments of the invention as illustrated in the accompanying drawings.

### BRIEF DESCRIPTION OF THE DRAWINGS

Figs. 1A, 1B, 1C, and 1D are diagrams for explaining a handoff method according to a first embodiment of the present invention;
Fig. 2 is an SDL diagram for explaining the operation of a home agent according to the first embodiment of the present invention;
Fig. 3 is a diagram showing an example of a mobile IP network into which a gateway foreign agent for implementing a handoff method according to a second embodiment of the present invention is incorporated;
Figs. 4A, 4B, 4C, and 4D are diagrams for explaining a handoff method according to a third embodiment of the present invention;
Fig. 5 is an SDL diagram for explaining the operation of a home agent according to the third embodiment of the present invention;
Fig. 6 is a flow chart for explaining determination of the attribute of an IP packet in accordance with a fourth embodiment of the present invention;
Fig. 7 is a diagram showing an example of a correspondence between a DSCP value and a traffic attribute;
Fig. 8 is a flow chart for explaining determination of the attribute of an IP packet in accordance with a fifth embodiment of the present invention;
Fig. 9 is a diagram showing an example of a list of registered port numbers;
Fig. 10 is a diagram showing one example of a cellular phone network in accordance with the Radio Access Network standard of 3GPP, which can perform mobile IP procedures, and which implements a handoff method according to a sixth embodiment of the present invention;
Fig. 11 is a sequence diagram for explaining a handover of mobile terminal equipment in the cellular phone network of Fig. 10;
Fig. 12 is a sequence diagram for explaining a handoff method according to a seventh embodiment of the present invention;
Fig. 13 is a sequence diagram for explaining a handoff method according to an eighth embodiment of the present invention;
Fig.14 is a diagram showing one example of a cellular phone network in accordance with the Radio Access Network standard of 3GPP, which can perform mobile IP procedures, and which implements a handoff method according to a ninth embodiment of the present invention;
Fig. 15 is a sequence diagram for explaining a handover of mobile terminal equipment in the cellular phone network of Fig. 14;
Figs. 16A, 16B, and 16C are diagrams for explaining a prior art handoff method; and
Figs. 17A and 17B are diagrams for explaining another prior art handoff method.

### DETAILED DESCRIPTION OF THE PREFERRED EMBODIMENTS

### Embodiment 1.

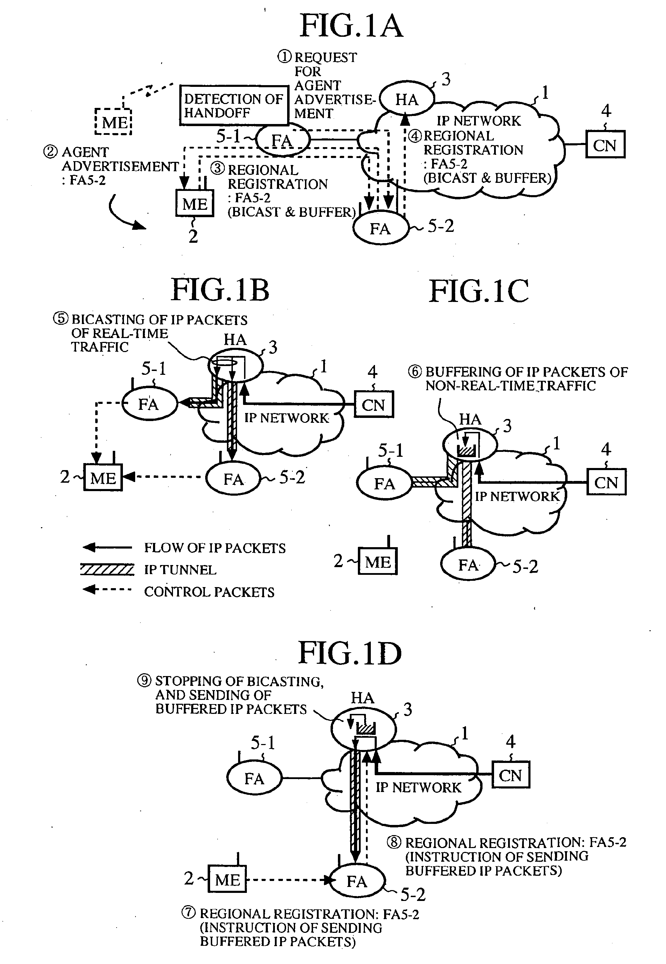

Figs. 1A, 1B, 1C, and 1D are diagrams for explaining a handoff method according to a first embodiment of the present invention. In Figs. 1A, 1B, 1C, and 1D, reference numeral 1 denotes an IP network that consists of routers and so on, numeral 2 denotes mobile terminal equipment (ME), numeral 3 denotes a home agent (HA), numeral 4 denotes other terminal equipment (CN) that is the party on the other end of the communication with the mobile terminal equipment 2, numeral 5-1 denotes a foreign agent (FA) (previous foreign agent) from which the mobile terminal equipment 2 is moving, and numeral 5-2 is foreign agent (FA) (new foreign agent) to which the mobile terminal equipment 2 is moving.

Next, a handoff capability of the mobile terminal equipment 2 in the mobile IP network will be explained. The FA 5-1, from which the ME 2 is moving, detects a start of a handoff of the ME 2 from the FA 5-1 to the FA 5-2, to which the mobile terminal equipment 102 is moving, based on layer 2 functionality provided by mobile IP, first. As shown in Fig. 1A, when the FA 5-1 detects a handoff, it makes a request of the FA 5-2 to agent-advertise to the ME 2. The FA 5-2 receives the request for the agent advertisement and then transmits the agent advertisement to the ME 2 by way of the FA 5-1.

When the ME 2 receives the agent advertisement, it transmits a mobile IP regional registration message to the FA 5-2 by way of the FA 5-1. The FA 5-2 then transfers the regional registration message to the HA 3. At this time, the ME 2 makes a request of the HA 3 for simultaneous binding defined by mobile IP, and performs a double regional registration of the ME 2 with the HA 3 so that the ME 2 is associated with both the FA 5-1 and the FA 5-2. As a result, both the IP address of FA 5-1 and the IP address of FA 5-2 are doubly registered with the HA 3 as a care-of address of the ME 2. The regional registration message includes a control message for causing IP packets of real-time traffic to be bicasted to the previous and new FAs 5-1 and 5-2 both associated with the ME 2, and causing IP packets of non-real-time traffic to be buffered into the HA 3.

Then, when the HA 3 receives an IP packet destined for the ME 2, it dynamically determines whether or not the IP packet is of real-time traffic. If the IP packet is of real-time traffic, the HA 3 bicasts the IP packet of real-time traffic to both the FA 5-1 and the FA 5-2 after encapsulating the IP packet of real-time traffic, as shown in Fig. 1B. Unless the IP packet is of real-time traffic, the HA 3 buffers the IP packet of non-real-time traffic, as shown in Fig. 1C.

After that, when the handoff has been completed and the ME 2 has moved to the FA 5-2 completely, the ME 2 transmits a mobile IP regional registration message to the FA 5-2, the message including a request to release the simultaneous binding and a request for batch-transfer of IP packets buffered in the HA 3. The FA 5-2 then transfers the regional registration message to the HA 3, as shown in Fig. 1D.

When the HA 3 receives the message, it updates the care-of address of the ME 2 so that itself is placed in a state in which only the IP address of the FA 5-2 is registered. The HA 3 also encapsulates IP packets buffered therein, and transfers them to the ME 2 at a time by way of the FA 5-2. The HA 3 then stops bicasting, and, after that, encapsulates any IP packet destined for the ME 2 and transfers it only to the FA 5-2.

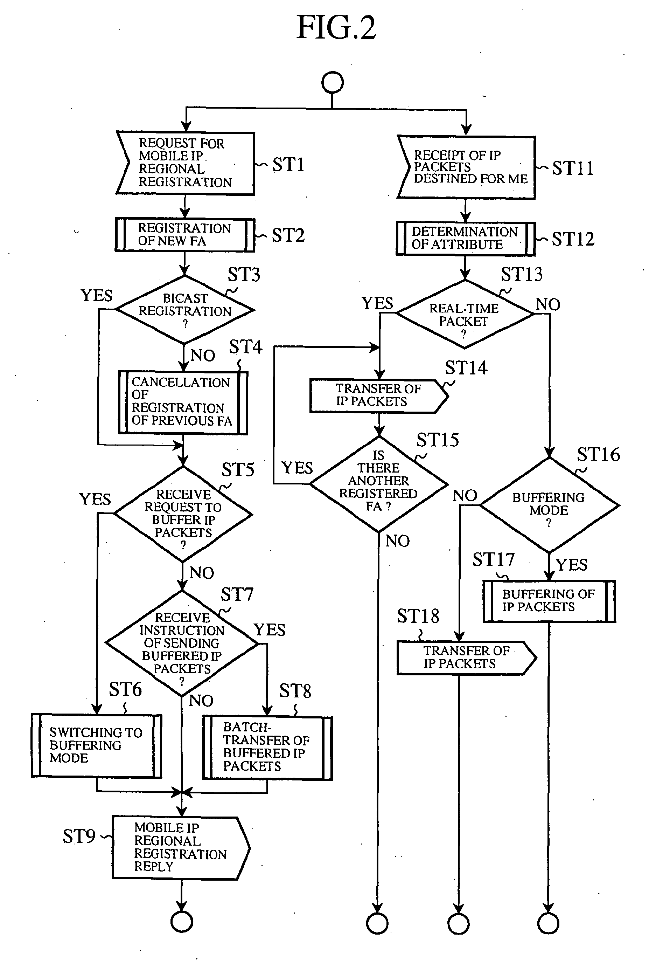

Next, a description will be made as to the operation of the home agent 3. Fig. 2 is an SDL (Specification and Description Language) diagram for explaining the operation of the home agent in accordance with the first embodiment of the present invention.

When the HA3, in step ST1, receives a request for a regional registration according to mobile IP, it registers a new FA according to the regional registration request in a built-in table not shown in the figure, in step ST2. The HA 3 then, in step ST3, determines whether or not the regional registration request is a request for a double or bicast registration, and, if not, cancels the registration of a previous FA, in step ST4. Next, the HA 3, in step ST5, determines whether or not a request for buffering has been made together with the regional registration request. If so, the HA 3, in step ST6, sets its internal mode to perform the buffering of IP packets of non-real-time traffic destined for the ME 2, which is the source that has made the regional registration request. Furthermore, the HA 3, in step ST7, determines whether or not a request for batch-transfer of IP packets buffered therein has been made together with the regional registration request. If so, the HA 3, in step ST8, transfers the buffered IP packets to the ME 2, which is the source that has made the regional registration request, at a time. After that, the HA 3, in step ST9, transmits a reply to the regional registration request according to mobile IP.

On the other hand, when the HA 3, in step ST11, receives an IP packet destined for the ME 2, it determines the attribute of the IP packet, in step ST12. The HA 3 then, in step ST13, determines whether or not the IP packet is a IP packet of real-time traffic. When the IP packet is of real-time traffic, the HA 3, in step ST14, transfers the IP packet towards an FA registered in the built-in table. The HA 3 further, in step ST15, determines whether or not the built-in table includes another FA to which the HA has not transmitted the IP packet yet. When such an FA exists in the table, the HA 3 returns to step ST14 in which it also transfers the same IP packet to the other FA.

When the IP packet is an IP packet of non-real-time traffic, the HA 3, in step ST16, determines whether or not it is placed in a buffering mode in which buffering can be performed. When the HA 3 is placed in the buffering mode, the HA 3, in step ST17, buffers the IP packet, and, otherwise, transfers the IP packet to registered FAs, in step ST18.

As mentioned above, in accordance with the first embodiment of the present invention, the handoff method comprises the steps of: when starting a handoff of the mobile terminal equipment 2 from the previous foreign agent 5-1 to the new foreign agent 5-2, doubly regional-registering the mobile terminal equipment 2 with the home agent 3 so that the mobile terminal equipment 2 is associated with both the previous foreign agent 5-1 and the new foreign agent 5-2, when the home agent 3 receives an IP packet destined for the mobile terminal equipment 2, allowing the home agent 3 to determine whether or not the IP packet is of real-time traffic, if the IP packet is of real-time traffic, to bicast it to both the previous foreign agent 5-1 and the new foreign agent 5-2, and, if the IP packet is of non-real-time traffic, to buffer it, when the handoff has been completed, updating the regional registration of the mobile terminal equipment 2 so that the mobile terminal equipment 2 is associated only with the new foreign agent 5-2, and, when IP packets of non-real-time traffic are buffered in the home agent 3, allowing the home agent 3 to transfer the IP packets of the non-real-time traffic to the new foreign agent 5-2. Accordingly, the mobile terminal equipment 2 needs not monitor IP packets so as to estimate the attribute of traffic beforehand and perform regional registrations. Furthermore, handoffs can be carried out properly even when real-time traffic and non-real-time traffic are generated at the same time.

Furthermore, since the home agent 3 performs the monitoring of IP packets, the bicasting, and the buffering, other equipment, such as the mobile terminal equipment 2, and the foreign agents 5-1 and 5-2, can be constructed at a low cost.

### Embodiment 2.

A handoff method according to a second embodiment of the present invention performs bicasting and buffering in a hierarchical mobile IP network where a gateway foreign agent is incorporated by using the gateway foreign agent, instead of a home agent according to the above-mentioned first embodiment.

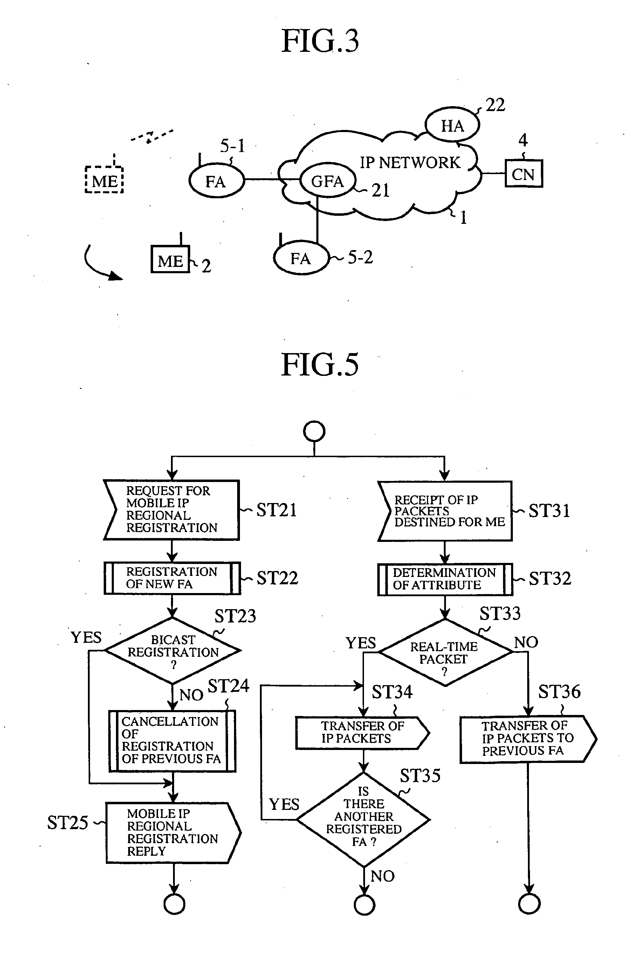

Fig. 3 is a diagram showing an example of the mobile IP network where the gateway foreign agent for performing the handoff method according to the second embodiment is incorporated. In the figure, reference numeral 21 denotes the gateway foreign agent (GFA) that is connected to foreign agents 5-1 and 5-2, and that performs bicasting and buffering, like the home agent 3 according to the first embodiment mentioned above, and numeral 22 denotes a home agent (HA). The explanation about the other components of Fig. 3 will be omitted hereafter since they are the same as those shown in Fig. 1A.

In other words, the GFA 21 operates like a prior art GFA, and performs bicasting and buffering like the above-mentioned HA 3.

As mentioned above, in accordance with the second embodiment of the present invention, the handoff method comprises the steps of: when starting a handoff of the mobile terminal equipment 2 from the previous foreign agent 5-1 to the new foreign agent 5-2, doubly regional-registering the mobile terminal equipment 2 with the gateway foreign agent 21 so that the mobile terminal equipment 2 is associated with both the previous foreign agent 5-1 and the new foreign agent 5-2, when the gateway foreign agent 21 receives an IP packet destined for the mobile terminal equipment 2, allowing the gateway foreign agent 21 to determine whether or not the IP packet is of real-time traffic, if the IP packet is of real-time traffic, to bicast it to both the previous foreign agent 5-1 and the new foreign agent 5-2, and, if the IP packet is of non-real-time traffic, to buffer it, when the handoff has been completed, updating the regional registration of the mobile terminal equipment 2 so that mobile terminal equipment 2 is associated only with the new foreign agent 5-2, and, when IP packets of non-real-time traffic are buffered in the gateway foreign agent 21, allowing the gateway foreign agent 21 to transfer the IP packets of the non-real-time traffic to the new foreign agent 5-2. Accordingly, the mobile terminal equipment 2 needs not monitor IP packets so as to estimate the attribute of traffic beforehand and perform regional registrations. Furthermore, handoffs can be carried out properly even when real-time traffic and non-real-time traffic are generated at the same time.

Furthermore, since the gateway foreign agent 21 performs the monitoring of IP packets, the bicasting, and the buffering, other equipment, such as the mobile terminal equipment 2, and the foreign agents 5-1 and 5-2, can be constructed at a low cost.

### Embodiment 3.

A handoff method according to a third embodiment of the present invention buffers an IP packet of non-real-time traffic destined for mobile terminal equipment by using a previous foreign agent instead of a home agent during a handoff.

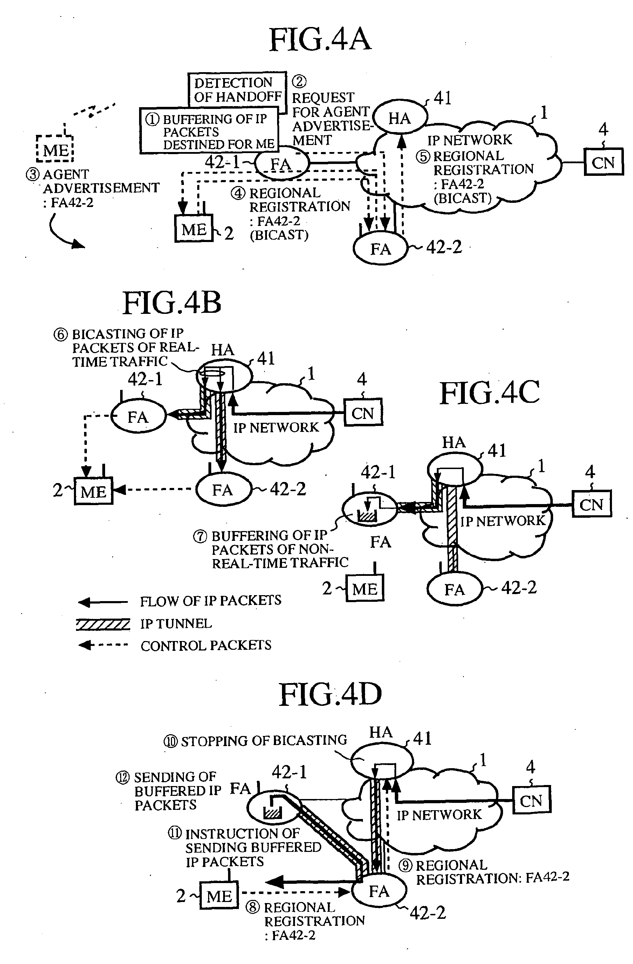

Figs. 4A, 4B, 4C, and 4D are diagrams for explaining the handoff method according to the third embodiment of the present invention. In Figs. 4A, 4B, 4C, and 4D, reference numeral 41 denotes a home agent (HA) for, when receiving an IP packet destined for the mobile terminal equipment 2 while the mobile terminal equipment 2 is doubly registered so that the IP packet is bicasted to the mobile terminal equipment 2, determining whether or not each of the IP packets is of real-time traffic, if the IP packet is of real-time traffic, bicasting the IP packet.to both a foreign agent 42-1 from which the mobile terminal equipment 2 is moving and a foreign agent 42-2 to which the mobile terminal equipment 2 is moving, and, if the IP packet is of non-real-time traffic, transferring the IP packet to the foreign agent 42-1 from which the mobile terminal equipment 2 is moving. The foreign agent 42-1, from which the mobile terminal equipment 2 is moving, buffers IP packets of non-real-time traffic transferred from the home agent 41. The explanation about the other components of Fig. 4A will be omitted hereafter since they are the same as those shown in Fig. 1A.

Next, a handoff of the mobile terminal equipment 2 in the mobile IP network will be explained. The FA 42-1, from which the ME 2 is moving, detects a start of a handoff of the ME 2 from the FA 42-1 to the FA 42-2, to which the ME 2 is moving, using layer 2 functionality provided by mobile IP. And, as shown in Fig. 4A, when the FA 42-1 detects a handoff, it starts buffering IP packets of non-real-time traffic destined for the ME 2 and makes a request of the FA 42-2 to agent-advertise to the ME 2. The FA 42-2 receives the request for the agent advertisement and then transmits the agent advertisement to the ME 2 by way of the FA 42-1.

When the ME 2 receives the agent advertisement, it transmits a mobile IP regional registration message to the FA 42-2 by way of the FA 42-1. The FA 42-2 then transfers the regional registration message to the HA 41. At this time, the ME 2 makes a request of the HA 41 for simultaneous binding defined by mobile IP, and performs a double regional registration of the ME 2 with the HA 41 so that the ME 2 is associated with both the FA 42-1 and the FA 42-2. As a result, both the IP address of FA 42-1 and the IP address of FA 42-2 are doubly registered with the HA 41 as a care-of address of the ME 2. The regional registration message includes a control message for causing IP packets of real-time traffic to be bicasted to both the previous and new FAs 42-1 and 42-2, and causing IP packets of non-real-time traffic to be transmitted only to the FA 42-1.

Then, when the HA 41 receives an IP packet destined for the ME 2, it dynamically determines whether or not the IP packet is of real-time traffic. If the IP packet is of real-time traffic, the HA 41 bicasts the IP packet of real-time traffic to both the previous FA 42-1 and the new FA 42-2 after encapsulating the IP packet of real-time traffic, as shown in Fig. 4B. Unless the IP packet is of real-time traffic, the HA 41 transmits the IP packet of non-real-time traffic only to the FA 42-1 from which the ME is moving, as shown in Fig. 4C. The FA 42-1 then buffers the IP packet of non-real-time traffic, as shown in Fig. 4C.

After that, when the handoff has been completed and the ME 2 has moved to the FA 42-2 completely, the ME 2 transmits a mobile IP regional registration message to the FA 42-2, the message including a request to release the simultaneous binding and a request for batch-transfer of IP packets buffered in the FA 42-1. The FA 42-2 transfers the received regional registration message to the HA 41 and transmits a request for batch-transfer of the buffered IP packets to the FA 42-1, as shown in Fig. 4D.

When the HA 41 receives the message, it updates the care-of address of ME 2 so that itself is placed in a state in which only the IP address of the FA 42-2 is registered, and then stops bicasting. After that, the HA 41 encapsulates any IP packet destined for the ME 2, and transfers it only to the FA 42-2. When the FA 42-1, from which the ME has moved, receives the request for batch-transfer of the buffered IP packets, it encapsulates the buffered IP packets and transfers them to the ME 2 by way of the FA 42-2 at a time.

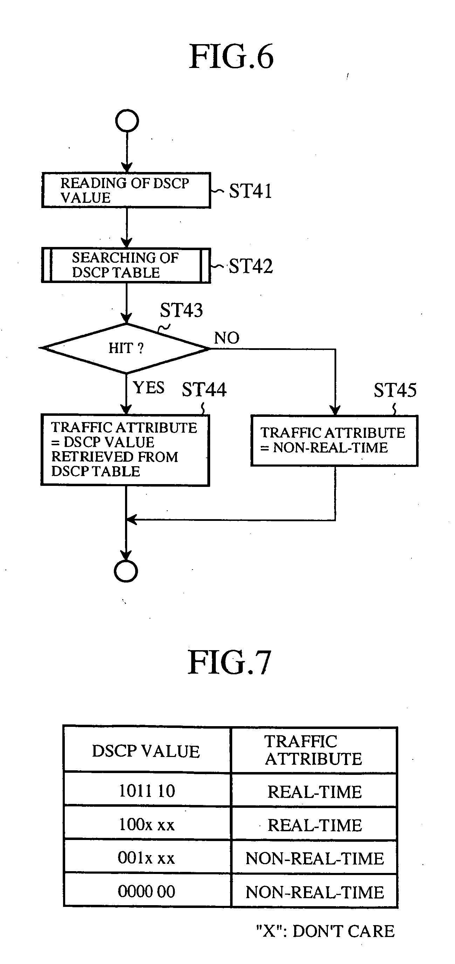

Next, a description will be made as to the operation of the home agent 41. Fig. 5 is an SDL diagram for explaining the operation of the home agent in accordance with the third embodiment of the present invention.

When the HA 41, in step ST21, receives a request for a regional registration according to mobile IP, it registers a new FA according to the regional registration request in a built-in table not shown in the figure, in step ST22. The HA 41 then, in step ST23, determines whether or not the regional registration request is a request for a double or bicast registration, if not, cancels the registration of a previous FA, in step ST24. After that, the HA 41, in step ST25, transmits a reply to the regional registration request according to mobile IP.

On the other hand, when the HA 41, in step ST31, receives an IP packet destined for the ME 2, it determines the attribute of the IP packet, in step ST32. The HA 41 then, in step ST33, determines whether or not the IP packet is an IP packet of real-time traffic. When the IP packet is of real-time traffic, the HA 41, in step ST34, transfers the IP packet towards an FA registered in the built-in table. The HA 41 further, in step ST35, determines whether the built-in table includes another FA to which the HA has not transmitted the IP packet yet. When such an FA exists in the table, the HA returns to step ST34 in which it also transfers the same IP packet to the other FA.

When the IP packet is an IP packet of non-real-time traffic, the HA 41, in step ST36, transfers the IP packet only to the previous FA.

As mentioned above, in accordance with the third embodiment of the present invention, the method comprising the step of buffering any packet of non-real-time traffic destined for the mobile terminal equipment 2 during handoff by using the previous foreign agent 42-1. It is therefore possible to use an existing large buffer which is used when the foreign agents 42-1 and 42-2 are connected to the mobile terminal equipment 2 via a low-speed link such as a radio interface. Thus, the buffer capacity in the entire network can be reduced, and the network can be constructed at a low cost.

### Embodiment 4.

A handoff method according to a fourth embodiment of the present invention determines whether an IP packet destined for an ME 2 is of real-time traffic or of non-real-time traffic by determining a DSCP value placed, as an attribute of the IP packet, in a DS field region of an IP header of the IP packet by using either an HA 3 or 41, as shown in Fig. 1A or 4A, or a GFA 21, as shown in Fig. 3.

Fig. 6 is a flow chart for explaining determination of the IP packet attribute in accordance with the fourth embodiment of the present invention. Fig. 7 is a diagram showing an example of a table showing a correspondence between the DSCP value and the traffic attribute.

As shown in Fig. 6, when determining the attribute of an IP packet received, either the HA 3 or 41 or the GFA 21, in step ST41, reads the DSCP value placed in the DS field region in the IP header of the received IP packet. Either the HA 3 or 41 or the GFA 21 then, in step ST42, searches through the table, as shown in Fig. 7, that stores the correspondence between DSCP values and traffic attributes for the DSCP value placed in the DS field region, and, in step ST43, determines whether or not the DSCP value is registered in the table. Either the HA 3 or 41 or the GFA 21, in step ST44, reads the traffic attribute corresponding to the DSCP value when the DSCP value is registered in the table. In contrast, when the DSCP value is not registered in the table, either the HA 3 or 41 or the GFA 21, in step ST45, assumes that the corresponding traffic attribute is non-real-time traffic. The table showing the correspondence as shown in Fig. 7 is determined beforehand and is stored in either the HA 3 or 41 or the GFA 21.

The other processing is the same as that according to any one of the first to third embodiments, and therefore the explanation of the other processing will be omitted hereafter.

As mentioned above, in accordance with the fourth embodiment of the present invention, since either the home agent 3 or 41 or the gateway foreign agent 21 determines whether or not an IP packet destined for the mobile terminal equipment is of real-time traffic based on the information on the header of the IP packet, the attribute of the traffic can be easily determined.

### Embodiment 5.

A handoff method according to a fifth embodiment of the present invention determines whether or not an IP packet destined for an ME 2 is of real-time traffic based on information on an upper layer which is placed, as an attribute of the IP packet, in a payload of the IP packet by using either an HA 3 or 41, as shown in Fig. 1A or 4A, or a GFA 21, as shown in Fig. 3.

For example, information on Voice over IP traffic which complies with SIP (Session Initiation Protocol) can be used as the upper layer information. It can be determined that only voice IP traffic is real-time traffic, and that any other traffic is non-real-time traffic.

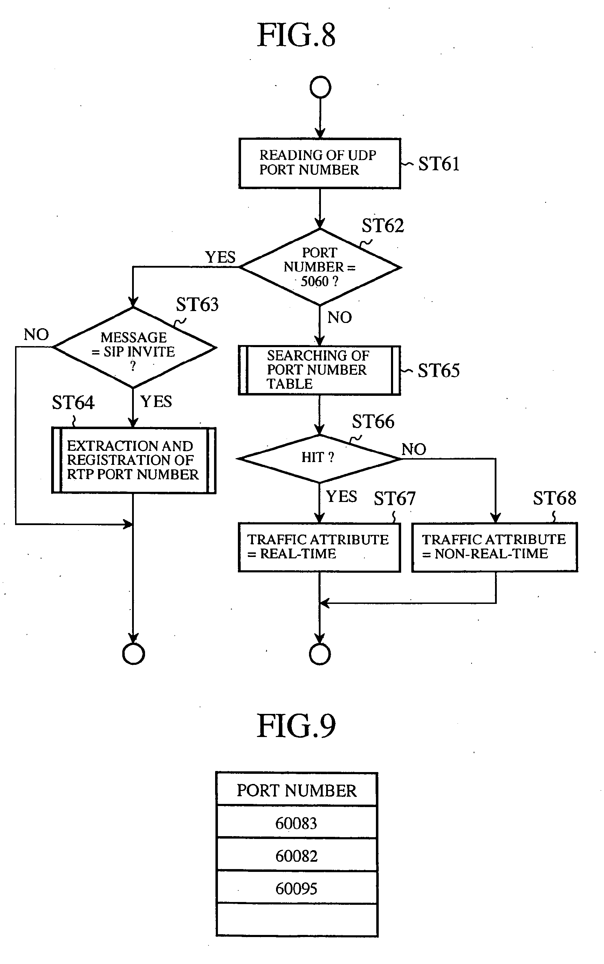

Fig. 8 is a flow chart for explaining determination of the attribute of an IP packet received in accordance with the fifth embodiment of the present invention. Fig. 9 is a diagram showing an example of a list of registered port numbers.

When either the HA 3 or 41 or the GFA 21 receives an IP packet, it, in step ST61, reads a UDP (User Datagram Protocol) port number. Either the HA 3 or 41 or the GFA 21 then, in step ST62, determines whether or not the UDP port number is a destination UDP port number, i.e., 5060, used for an SIP message. When the UDP port number is 5060, either the HA 3 or 41 or the GFA 21 further, in step ST63, determines whether or not the SIP message is an invite message, and further determines whether or not its content type is Application/SDP. When the SIP message is an invite message and the content type is Application/SDP, either the HA 3 or 41 or the GFA 21, in step ST64, extracts an RTP port number, which internet services use, from the IP packet, and registers it as set data in the list of port numbers.

In contrast, when the UDP port number is not 5060, either the HA 3 or 41 or the GFA 21, in step ST65, searches through the list of set data as shown in Fig. 9 so as to determine whether or not the RTP port number extracted from the IP packet is registered in the list, in step ST66. When the RTP port number extracted from the IP packet is registered in the list, either the HA 3 or 41 or the GFA 21, in step ST67, determines that the IP packet is of real-time traffic. In contrast, when the RTP port number extracted from the IP packet is not registered in the list, either the HA 3 or 41 or the GFA 21, in step ST68, determines that the IP packet is of non-real-time traffic. When there is no communication during a fixed time period, i.e., when a timeout occurs, the list of set data is automatically deleted.

The other processing is the same as that according to the first or second embodiment, and therefore the explanation of the other processing will be omitted hereafter.

As mentioned above, in accordance with the fifth embodiment of the present invention, since either the home agent 3 or 41 or the gateway foreign agent 21 determines whether or not an IP packet destined for the mobile terminal equipment 2 is of real-time traffic based on the information on the upper layer placed in the payload of the IP packet, the attribute of traffic can be determined more precisely.

### Embodiment 6.

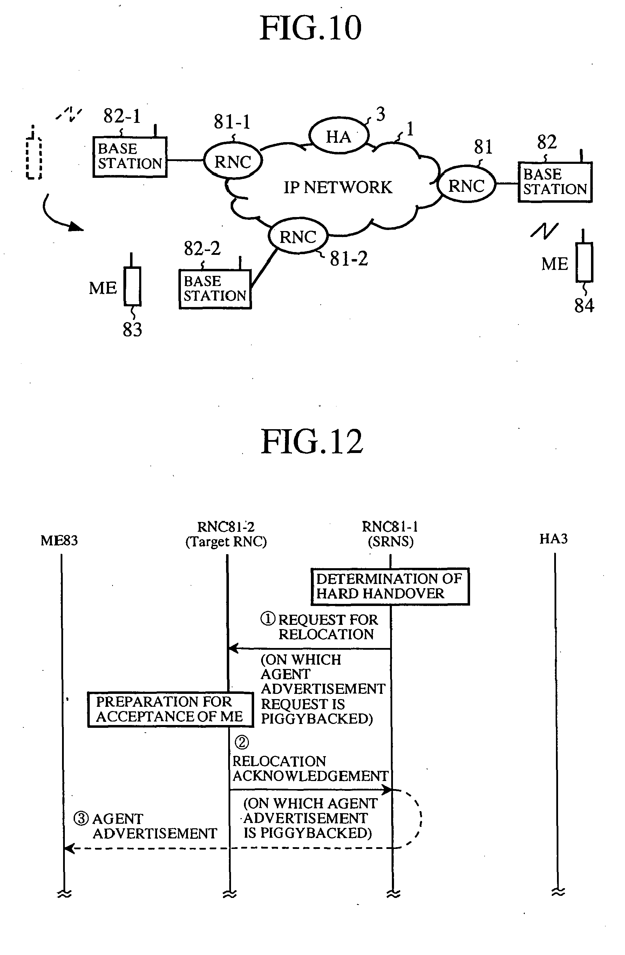

Fig. 10 is a diagram showing one example of a cellular phone network in accordance with the Radio Access Network standard of 3GPP, which can perform mobile IP procedures, and which implements a handoff method according to a sixth embodiment of the present invention. In Fig. 10, reference numerals 81, 81-1, and 81-2 denote radio network control units (RNC) each of which has a function of serving as a foreign agent, and each of which gives and receives an authority to control a cellular phone 83 as a handoff according to an SRNC relocation procedure. In addition, the RNC 81 is the one which accommodates a cellular phone 84 that is the party on the other end of the communication with the cellular phone 83. The RNC 81-1 is the one from which the cellular phone 83 is moving. The RNC 81-2 is the one to which the cellular phone 83 is moving. Reference numeral 82 denotes a base station that performs communication by radio between the RNC 81 and cellular phones accommodated by the RNC 81, numeral 82-1 denotes a base station that performs communication by radio between the RNC 81-1 and cellular phones accommodated by the RNC 81-1, and numeral 82-2 denotes a base station that performs communication by radio between the RNC 81-2 and cellular phones accommodated by the RNC 81-2. Each of the cellular phones (ME) 83 and 84 can serve as mobile terminal equipment. It is assumed that neither of the RNCs 81-1 and 81-2 included in the network has a soft handover function. The explanation about the other components of Fig. 10 will be omitted hereafter because they are the same as those of the first embodiment as shown in Fig. 1A.

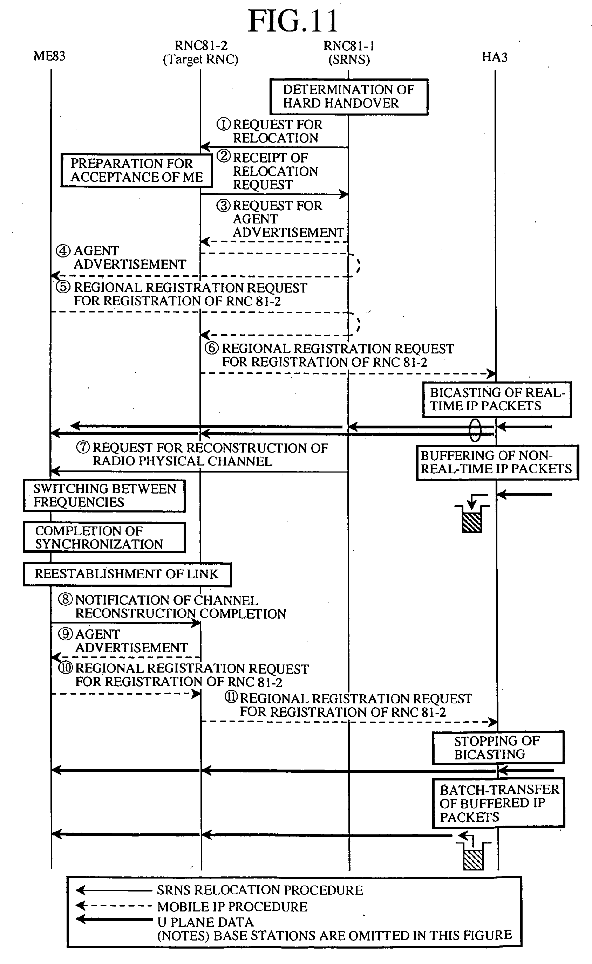

Next, a handoff of the ME 83 in the mobile IP network will be explained. Hereafter, assume that the ME 83 is moving from the RNC 81-1 to the RNC 81-2 so that the ME will be accommodated by the RNC 81-2. At this time, an authority to control the ME 83 is transferred from the base station 82-1 to the base station 82-2 connected to the RNC 81-2 according to an SRNC relocation procedure. Fig. 11 is a sequence diagram for explaining a handover of the ME 83 in the cellular phone network of Fig. 10.

The RNC 81-1, from which the ME 83 is moving, detects a start of a handover of the ME 83 from the RNC 81-1 to the RNC 81-2, to which the ME 83 is moving, using layer 2 functionality provided by mobile IP. When the RNC 81-1, from which the ME 83 is moving, detects a start of a handover, it starts an SRNC relocation procedure as shown in Fig. 11. The RNC 81-1, from which the ME 83 is moving, transmits a relocation request to the RNC 81-2, to which the ME 83 is moving, and makes a request of the RNC 81-2 for preparation for acceptance of the ME 83. When the RNC 81-2 then completes the acceptance preparation, it transmits a relocation acknowledgment to the RNC 81-1.

Next, the RNC 81-1 makes a request of the RNC 81-2 to agent-advertise to the ME 83 according to a procedure defined by mobile IP. The RNC 81-2 which receives the agent advertisement request transmits the agent advertisement to the ME 83 by way of the RNC 81-1. The ME 83 receives the agent advertisement and then transmits a mobile IP regional registration message to the RNC 81-2 by way of the RNC 81-1, and the RNC 81-2 transfers the regional registration message to the HA 3. In the regional registration, the ME 83 makes a request of the HA 3 to perform simultaneous binding on IP packets of real-time traffic so that they are transferred to both the RNC 81-1 and the RNC 81-2, and to temporarily buffer IP packets of non-real-time traffic.

After that, when the HA 3 receives an IP packet destined for the ME 83, it dynamically determines whether the IP packet is of real-time traffic or of non-real-time traffic based on the attribute of the IP packet.

When performing a handover, the RNC 81-1 makes a. request of the ME 83 to reconstruct a radio physical channel. When the ME 83 receives the reconstruction request, it changes the frequency and so on, and brings its timing channel in synchronization with a timing channel of other terminal equipment that is the party on the other end of the communication. After that, when the ME 83 reestablishes a radio link with the base station 82-2, it transmits a message indicating the completion of the reconstruction of the channel to the RNC 81-2 by way of the base station 82-2. When the RNC 81-2 receives the message, it transmits an agent advertisement to the ME 83 to notify the ME 83 that the handover has been completed. After the handover has been completed, the ME 83 transmits a mobile IP regional registration message including a request to release simultaneous binding and a request for batch-transfer of buffered IP packets to the RNC 81-2, and the RNC 81-2 then transfers the message to the HA 3.

The explanation about the simultaneous binding and buffering by means of the HA 3 will be omitted hereafter because these operations are the same as those according to the above-mentioned first embodiment.

As mentioned above, in accordance with the sixth embodiment of the present invention, there is provided a cellular phone system including a cellular phone network disposed as a mobile IP network, which complies with the Radio Access Network standard of 3GPP and which can perform mobile IP procedures, a cellular phone 83 disposed as mobile terminal equipment, and radio network control units 81-1 and 81-2, disposed as foreign agents, which gives and receives an authority to control the cellular phone 83 as a handoff according to an SRNC relocation procedure, the radio network control units 81-1 and 81-2 each being able to detect the start time and end time of a handoff according to the SRNC relocation procedure, and, when the cellular phone 83 can establish communication based on mobile IP, to notify the cellular phone 83 of the start time and end time of the handoff according to a mobile IP procedure. Accordingly, the SRNC relocation procedure is united with the mobile IP handoff procedure, and it is possible to perform a fast handoff and mobile IP can be applied to the cellular phone network.

Furthermore, like the above-mentioned embodiments, since the home agent 3 can dynamically determine whether a packet received is of real-time traffic or of non-real-time traffic and perform processing according to the determination result, cellular phones can satisfactorily enjoy real-time traffic such as telephone calls and non-real-time traffic according to internet services at the same time.

### Embodiment 7.

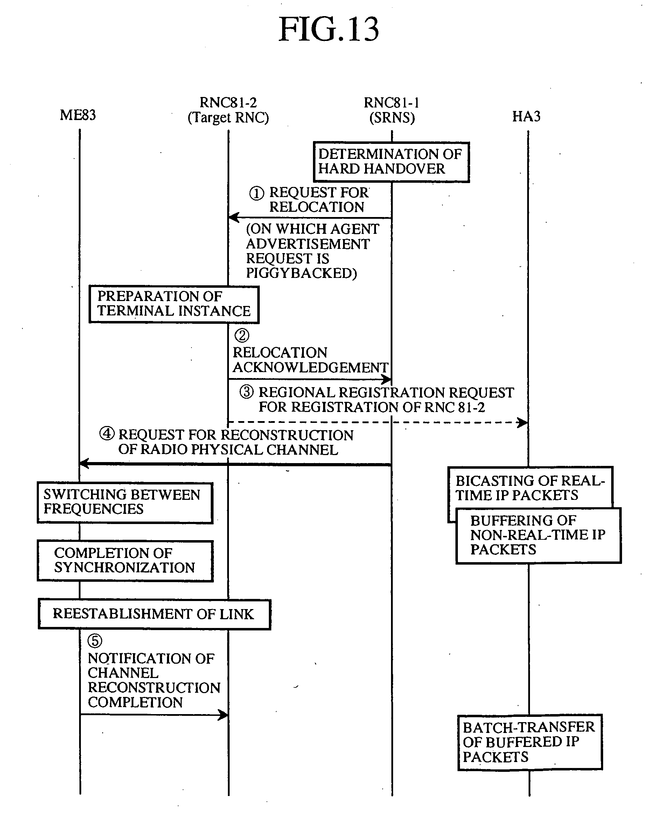

A handoff method according to a seventh embodiment of the present invention comprises the steps of allowing each of RNCs 81-1 and 81-2 to piggyback a mobile IP message onto a control message generated according to an SRNC relocation procedure, in addition to the steps provided by the handoff method according to the above-mentioned sixth embodiment. Fig. 12 is a sequence diagram for explaining the handoff method according to the seventh embodiment of the present invention.

In a network as shown in Fig. 10, the RNC 81-1, from which an ME 83 is moving, detects a start of a handover of the ME 83 from the RNC 81-1 to the RNC 81-2, to which the ME is moving, using layer 2 functionality provided by mobile IP, first. When the RNC 81-1, from which the ME 83 is moving, detects a start of a handover, it starts an SRNC relocation procedure as shown in Fig. 12. The RNC 81-1, from which the ME 83 is moving, transmits a relocation request to the RNC 81-2, to which the ME 83 is moving. At this time, a request for an agent advertisement for mobile IP is piggybacked onto the relocation request.

And, when the RNC 81-2 completes a preparation for acceptance of the ME 83, the RNC 81-2 transmits a relocation acknowledgment to the RNC 81-1. At this time, the agent advertisement for mobile IP is piggybacked onto the relocation acknowledgment. When the RNC 81-1 receives the agent advertisement piggybacked onto the relocation acknowledgment, it transfers it to the ME 83.

The explanation about processing followed by the above-mentioned process will be omitted hereafter because it is the same as that according to the above-mentioned sixth embodiment.

As mentioned above, in accordance with the seventh embodiment of the present invention, each of the radio network control units 81-1 and 81-2 can piggyback a mobile IP message onto a control message generated according to an SRNC relocation procedure, thus decreasing the frequency at which messages are transmitted, and hence reducing the band of frequencies in the network which is occupied by control messages.

### Embodiment 8.

A handoff method according to an eighth embodiment of the present invention comprises the step of allowing each of RNCs 81-1 and 81-2 to terminate a mobile IP procedure on behalf of an ME 83, in addition to the steps provided by the handoff method according to the above-mentioned seventh embodiment. Fig. 13 is a sequence diagram for explaining the handoff method according to the eighth embodiment of the present invention.

In a network as shown in Fig. 10, the RNC 81-1, from which the ME 83 is moving, detects a start of a handover of the ME 83 from the RNC 81-1 to the RNC 81-2, to which the ME is moving, using layer 2 functionality provided by mobile IP, first. When the RNC 81-1, from which the ME 83 is moving, detects a start of a handover, it starts an SRNC relocation procedure as shown in Fig. 13. The RNC 81-1, from which the ME 83 is moving, transmits a relocation request to the RNC 81-2, to which the ME 83 is moving. At this time, a request for an agent advertisement for mobile IP is piggybacked onto the relocation request.

And, when the RNC 81-2 completes a preparation for acceptance of the ME 83, the RNC 81-2 transmits a message indicating the completion of the relocation to the RNC 81-1. At this time, the RNC 81-2 performs a regional registration with the HA 3 on behalf of the ME 83, instead of transmitting an agent advertisement for mobile IP to the ME 83. In the regional registration, the ME 83 makes a request of the HA 3 to perform simultaneous binding on IP packets of real-time traffic so that they are transferred to both the RNC 81-1 and the RNC 81-2, and to temporarily buffer IP packets of non-real-time traffic.

When performing a handover, the RNC 81-1 makes a request of the ME 83 to reconstruct a radio physical channel. When the ME 83 receives the reconstruction request, it changes the frequency and so on. After that, when the ME 83 reestablishes a radio link with a base station 82-2, it transmits a message indicating the completion of the reconstruction of the channel to the RNC 81-2 by way of the base station 82-2.

When the RNC 81-2 receives the message, it transmits a mobile IP regional registration message including a request to release simultaneous binding and a request for batch-transfer of buffered packets to the RNC 81-2 on behalf of the ME 83, instead of transmitting an agent advertisement to the ME 83. The RNC 81-2 then transfers the message to the HA 3.

As mentioned above, in accordance with the eighth embodiment of the present invention, each of the radio network control units 81-1 and 81-2 can detect the start time and end time of a handoff according to an SRNC relocation procedure, and, when the cellular phone 83 cannot establish communication according to mobile IP, to notify the cellular phone 83 of the start time and end time of the handoff according to the SRNC relocation procedure, and can autonomously perform a regional registration of the cellular phone 83 and change the regional registration on behalf of the mobile terminal equipment 83. Regardless of whether the cellular phone 83 can establish communication according to mobile IP, handoffs can be carried out properly even when real-time traffic exists together with non-real-time traffic.

### Embodiment 9.

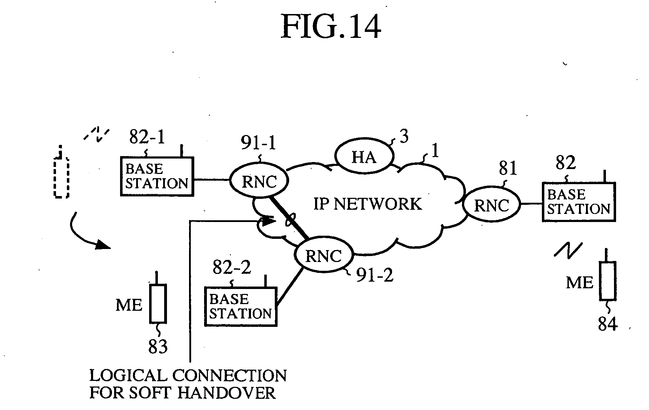

A handoff method according to a ninth embodiment of the present invention comprises the steps of performing bicasting and buffering as mentioned above while performing a soft handover in a cellular phone network which complies with the Radio Access Network standard of 3GPP, and which can perform mobile IP procedures. Fig. 14 is a diagram showing one example of the cellular phone network in accordance with the Radio Access Network standard of 3GPP, which can perform mobile IP procedures, and which implements the handoff method according to the ninth embodiment of the present invention. In the figure, reference numerals 91-1 and 91-2 denote radio network control units (RNC) each of which can perform a soft handover. The explanation about the other components of Fig. 14 will be omitted hereafter because they are the same as those of the first embodiment as shown in Fig. 10.

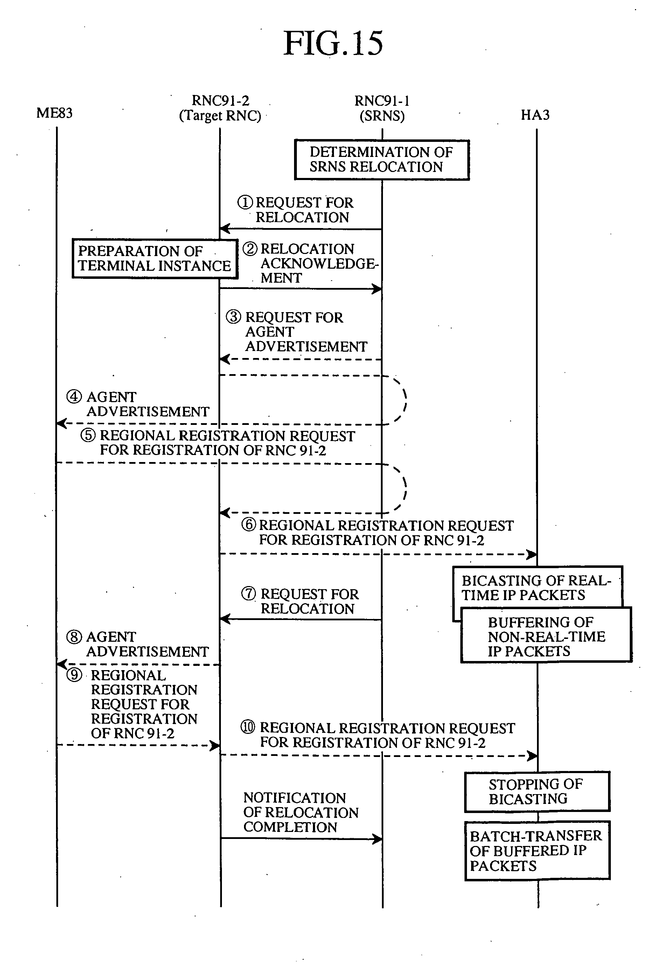

Next, a handoff of an ME 83 in the mobile IP network will be explained. Hereafter, assume that the ME 83 is moving from the RNC 91-1 to the RNC 91-2 so that the ME will be accommodated by the RNC 91-2. At this time, an authority to control the ME 83 is transferred from a base station 82-1 to a base station 82-2 connected to the RNC 91-2 according to an SRNC relocation procedure. Fig. 15 is a sequence diagram for explaining a handover of the ME 83 in the cellular phone network of Fig. 14.

Part of handover processing from the start to the regional registration ⑥ performed after the agent advertisement is the same as that, as shown in Fig. 11 according to the above-mentioned sixth embodiment. In the SRNC relocation during a soft handover, when the RNC 91-1, from which the ME 83 is moving, receives a relocation acknowledgment, it makes a request of the RNC 91-2, to which the ME 83 is moving, to commit the SRNC relocation. When the RNC 91-2 receives the relocation commitment request from the RNC 91-1, it starts controlling the ME 83.

The RNC 91-2 transmits an agent advertisement to the ME 83 at this time so as to notify the ME 83 that the SRNC relocation has been completed. When the ME 83 receives the notification, it transmits a mobile IP regional registration message including a request to release simultaneous binding and a request for batch-transfer of buffered packets to the RNC 91-2. The RNC 91-2 receives then transfers the message to the HA 3.

The explanation about the simultaneous binding and buffering by means of the HA 3 will be omitted hereafter because these operations are the same as those according to the above-mentioned first embodiment.

As mentioned above, in accordance with the ninth embodiment of the present invention, after the plurality of radio network control units 91-1 and 91-2 have accommodated the same cellular phone 83, the previous radio network control unit 91-1 can assume that an SRNC relocation procedure generated after a predetermined transfer of an authority to control the cellular phone 83 is a handoff procedure so as to detect the start time and end time of a handoff. Accordingly, a handoff can be carried out properly while a soft handover is carried out even when real-time traffic exists together with non-real-time traffic.

Many widely different embodiments of the present invention may be constructed without departing from the spirit and scope of the present invention. It should be understood that the present invention is not limited to the specific embodiments described in the specification, except as defined in the appended claims.

## Claims

1. A handoff method of performing a handoff when mobile terminal equipment (2) is moving from a previous foreign agent (5-1) to a new foreign agent (5-2) in a mobile IP network (1), said method comprising the steps of:
when starting a handoff, additionally performing a regional registration of said mobile terminal equipment so as to doubly register said mobile terminal equipment so that said mobile terminal equipment is associated with both said previous foreign agent and said new foreign agent;
determining whether or not an IP packet destined for said mobile terminal equipment is of real-time traffic when said mobile terminal equipment is doubly registered;
bicasting the IP packet to both said previous foreign agent and said new foreign agent if the IP packet is of real-time traffic, and buffering the IP packet if the IP packet is of non-real-time traffic;
when the handoff is completed, if IP packets of non-real-time traffic are buffered, transferring the buffered IP packets of non-real-time traffic to said new foreign agent.

2. The handoff method according to Claim 1, **characterized in that** in said double regional registration step, said mobile terminal equipment is registered with a home agent (3), and said home agent performs said IP packet determination step, said bicasting and buffering step, and said transferring step.

3. The handoff method according to Claim 2, **characterized in that** said home agent determines whether or not an IP packet destined for said mobile terminal equipment is of real-time traffic based on information on a header of the IF packet.

4. The handoff method according to Claim 2, **characterized in that** said home agent determines whether or not an IP packet destined for said mobile terminal equipment is of real-time traffic based on information on an upper layer, which is placed in a payload of the IP packet.

5. The handoff method according to Claim 1, **characterized in that** in said double regional registration step, said mobile terminal equipment is registered with a gateway foreign agent (21), and said gateway foreign agent performs said IP packet determination step, said bicasting and buffering step, and said transferring step.

6. The handoff method according to Claim 5, **characterized in that** said gateway foreign agent determines whether or not an IP packet destined for said mobile terminal equipment is of real-time traffic based on information on a header of the IP packet.

7. The handoff method according to Claim 5, **characterized in that** said gateway foreign agent determines whether or not an IP packet destined for said mobile terminal equipment is of real-time traffic based on information on an upper layer, which is placed in a payload of the IP packet.

8. The handoff method according to anyone of Claims 1 to 7, **characterized in that** said mobile IP network is a mobile phone network in accordance with Radio Access Network standards which can perform a mobile IP procedure, said mobile terminal equipment is a mobile phone (83), and each of said new and the previous foreign agents is a radio network control unit (81-1 or 81-2) that can give, and receive an authority to control said mobile phone, as a handoff, according to an SRNC relocation procedure.

9. A handoff method of performing a handoff when mobile terminal equipment (2) is moving from a previous foreign agent (42-1) to a new foreign agent (42-2) in a mobile IP network (1), **characterized, in that** said method comprises the steps of:
when starting a handoff, additionally performing a regional registration of said mobile terminal equipment with a home agent so as to doubly register said mobile terminal equipment so that said mobile terminal equipment is associated with both said previous foreign agent and said new foreign agent;
allowing said home agent to determine whether or not an IP packet destined for said mobile terminal equipment is of real-time traffic when said mobile terminal equipment is doubly registered;
allowing said home agent to bicast the IP packet to both said previous foreign agent and said new foreign agent if the IP packet is of real-time traffic, and transferring the IP packet to said previous foreign agent if the IP packet is of non-real-time traffic;
allowing said previous foreign agent to buffer the IP packet of non-real-time traffic transferred from said home agent therein;
when the handoff is completed, if IP packets of non-real-time traffic are buffered in said previous foreign agent, allowing said previous foreign agent to transfer the buffered IP packets of non-real-time traffic to said new foreign agent.

10. An agent apparatus (3) for transferring IP packets to a new foreign agent (5-2) in a mobile IP network (1), to which mobile terminal equipment (2) is moving, **characterized in that** said apparatus comprises:
a means for, upon receiving an IP packet destined for said mobile terminal equipment when said mobile terminal equipment is doubly registered during a handoff,
determining whether or not the IP packet is of real-time traffic;
a means for bicasting the IP packet to both, said previous foreign agent and said new foreign agent if the IP packet is of real-time traffic, and for buffering the IP packet if the IP packet is of non-real-time traffic;
a means for, when the handoff has been completed and IP packets of non-realtime traffic are buffered, transferring the buffered IP packets of non-real-time traffic to said new foreign agent.
